# EUROPEAN PATENT APPLICATION

(11) **EP 4 567 950 A1**
(43) Date of publication of application: **11.06.2025**
(21) Application number: 24741742.1
(22) Date of filing: 12.01.2024
(51) Int. Cl.: H01M 10/04, H01M 50/54

(54) **CELL STACKING METHOD**

(30) Priority: 13.01.2023 KR 20230005584
(71) Applicant: LG Energy Solution, Ltd., Seoul 07335 (KR)
(72) Inventor: AHN, Soo Jun, Daejeon 34122 (KR); KIM, Tae Wook, Daejeon 34122 (KR); LEE, Seung Jun, Daejeon 34122 (KR); LEE, Jung Woo, Daejeon 34122 (KR)
(74) Representative: Plasseraud IP
(86) International application number: PCT/KR2024/000585
(87) International publication number: WO 2024/151121

(57) **Abstract**

The present technology relates to a method of stacking cells include establishing an imaginary base line at a center of the cells; stacking a plurality of cells with the base line established; and the stacked cells are aligned such that the base lines coincide.

## Description

### [Technical Field]

The present invention relates to a method of stacking cells, characterized by establishing an imaginary base line on each cell and aligning the cells so that the base lines coincide.

This application claims the benefit of priority based on Korean Patent Application No. 10-2023-0005584, filed on January 13, 2023, and the entire contents of the Korean patent application are incorporated herein by reference.

### [Background Art]

Secondary batteries, which possess electrical characteristics such as high energy density and ease of application according to product range, are widely applied not only in portable devices but also in electric or hybrid vehicles driven by electric power sources, power storage devices, etc. These secondary batteries are attracting attention as a new energy source for eco-friendly and energy efficiency improvement, not only because of their primary advantage of dramatically reducing the use of fossil fuels, but also because they do not generate any byproducts from the use of energy.

While small mobile devices use one or two battery cells per device, medium and large devices, such as automobiles, require high power and large capacity. Therefore, medium to large battery modules with many battery cells electrically connected are used.

Since it is desirable for a medium to large-sized battery module to be manufactured with as small a size and weight as possible, prismatic batteries, pouch-type batteries, and the like, which can be stacked with a high density and have a small weight relative to capacity, are mainly used as battery cells in medium to large-sized battery modules.

In general, the battery module may include a frame member having an open front and back side to receive the cell stack in an internal space to protect the cell stack from external shock, heat, or vibration.

Meanwhile, in a cell stack in the form of a plurality of battery cells stacked together, the alignment of each battery cell is one of the important issues affecting the performance of the secondary battery.

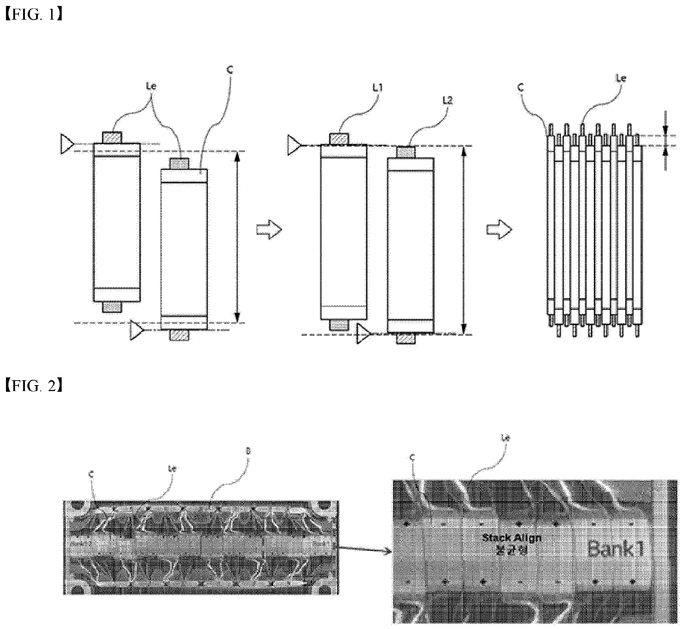

Prior to stacking the battery cells C, the position of each battery cell C is corrected as shown in FIG. 1, and then the battery cells C are stacked, but some position imbalance may occur depending on structural limitations of the battery cells C and the like.

FIG. 2 illustrates a cell stack Cs including a battery module, and it can be seen that there is a misalignment between the battery cells Cs, wherein the positions of the positive leads L1 and the negative leads L2 are opposite to each other.

In this way, if the position of each battery cell C including in the cell stack Cs is slightly misaligned, a contact error may occur between the electrode leads Le and the busbar B electrically connected to the electrode leads Le.

### [Related Art Document]

### [Patent Document]

Korean Patent Publication No. 10-2021-0049471

### [Disclosure]

### [Technical Problem]

Therefore, the present invention is invented to solve the above problems, and directed to provide a cell stacking method that can increase the alignment of each cell with regard to stacking cells.

Other objects and advantages of the present invention will be understood from the following description, which will become more apparent from the embodiments of the present invention, and it will be easily understood that the objects and advantages of the present invention may be realized by the means and combinations thereof disclosed in the claims of the patent.

### [Technical Solution]

The present invention provides a method of stacking cells, characterized in that the method includes establishing an imaginary base line at a center of the cells; and stacking a plurality of cells with the base line established, the stacked cells are aligned such that the base lines coincide.

The cell may comprise an electrode assembly having a plurality of electrodes stacked therein, and electrode leads may be derived on both sides electrically connected with the electrode assembly, respectively.

A base line may be established at a position corresponding to a center of an electrode included in an uppermost portion of the electrode assembly.

The cell may include an accommodating part in which the electrode assembly is located; and a derivation part in which the electrode leads are located.

A step is formed between the accommodating part and the derivation part, and the center may correspond to a location centered on the location where the step begins on both sides of the accommodating part.

The center of the cell may correspond to a location centered at a corner of both ends of the accommodating part.

The center of the cell may correspond to a position based on the corner positions of both ends of the accommodating part is one half.

The base line may be formed across the center of the cell such that electrode leads are positioned on both sides.

The base line may be formed to a position centered at the position of both ends of the electrodes included in the uppermost portion of the electrode assembly.

The electrode assembly, including a positive electrode, a separator, and a negative electrode, wherein the electrode leads include a positive lead electrically connected to the positive electrode of the electrode assembly and a negative lead electrically connected to the negative electrode of the electrode assembly, and wherein the neighboring pair of cells may be alternately stacked so that the positions of the positive lead and the negative lead are opposite.

Each of the cells may be adjusted in position by moving horizontally so that the base lines coincide.

### [Advantageous Effects]

According to the present invention, with regard to stacking the cells, the alignment of each cell can be improved, thereby improving the stability of the secondary battery.

### [Brief Description of the Drawings]

FIG. 1 illustrates a conventional cell stack formation process.
FIG. 2 is an illustration of a cell stack including a conventional battery module.
FIG. 3 is a flowchart of a cell stacking method of the present invention.
FIG. 4 illustrates a cell and a visual sensor to be utilized in the cell stacking method according to a first embodiment of the present invention.
FIG. 5 is a side view of the cell and visual sensor of FIG. 4.
FIG. 6 illustrates a boundary point of an accommodating part and a derivation part of a cell.
FIG. 7 is an illustration of a process of stacking a plurality of cells.
FIG. 8 illustrates a cell and a visual sensor to be utilized in a method of stacking cells according to a second embodiment of the present invention.
FIG. 9 is a side view of the cell and visual sensor of FIG. 8.

### [Best Mode]

The present invention will now be described in detail with reference to the accompanying drawings, which illustrate preferred embodiments of the present invention. It is hereby understood that the terms and words used in this specification and claims are not to be construed in their ordinary or dictionary sense, but are to be interpreted with a meaning and concept consistent with the technical idea of the present invention, based on the principle that the inventor may define the concept of a term as he or she considers appropriate to best describe the invention.

However, it should be understood that the present invention is not limited to the specific embodiments, and includes all modifications, equivalents, or alternatives within the spirit and technical scope of the present invention.

In addition, in describing the present invention, specific descriptions of related disclosed configurations or functions are omitted where it is considered that such detailed description would obscure the subject matter of the present invention.

The present invention is shown in embodiment to more fully explain the present invention to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present invention relates to a method of stacking cells, characterized in that an imaginary base line is established on each cell and the cells are aligned and stacked so that the base lines coincide.

The plurality of cells is stacked in a certain quantity to form a cell stack, and the cell stack thus formed is coupled with a busbar electrically connected to each cell and a frame enclosing an outer surface to protect the cell stack to form a battery module.

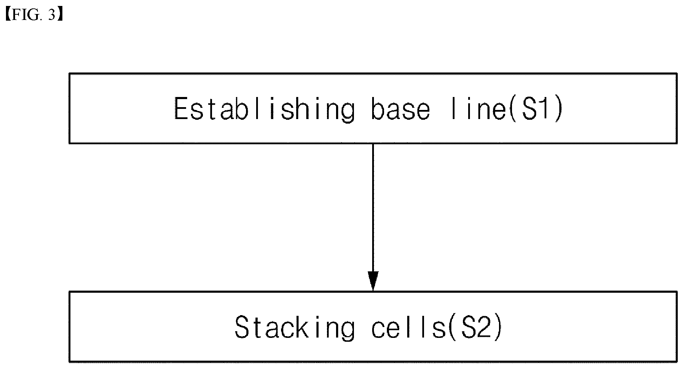

FIG. 3 is a flowchart of a cell stacking method of the present invention. Hereinafter, the cell stacking method of the present invention will be described with reference to the above flowchart.

### (first embodiment)

### Establishing S1 Base line BL

Establishing an imaginary base line BL at the center of the cell C.

The center of the cell C may be found by identifying the corner parts Co on both sides of the cell C with a visual sensor S.

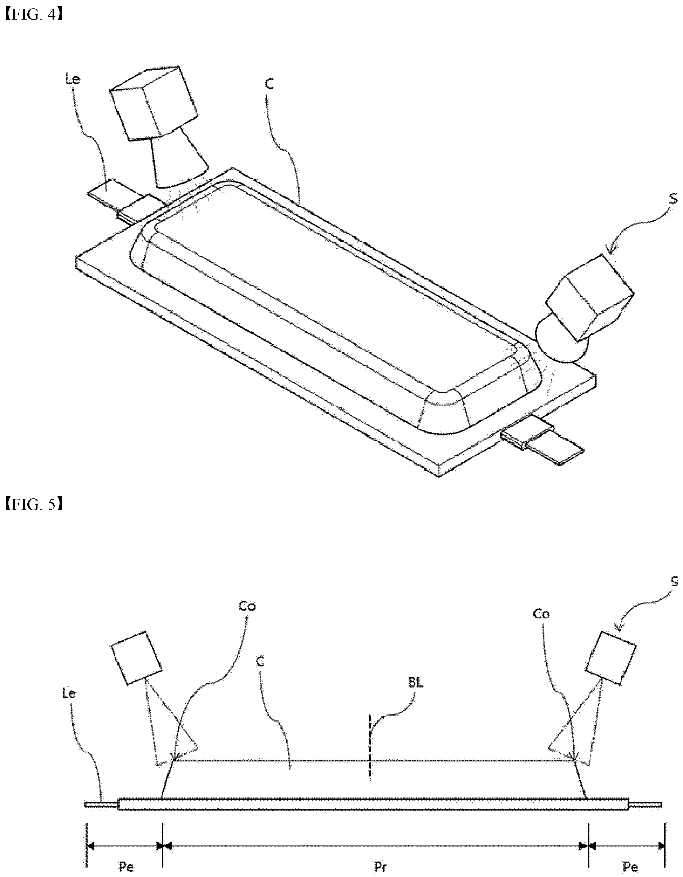

FIG. 4 shows a cell C to be used in a method of stacking cells C according to a first embodiment of the present invention, and a visual sensor S to be used to locate the center of the cell C, and FIG. 5 is a side view of the cell C and visual sensor S of FIG. 4.

The cell C has an electrode assembly (not shown) having a plurality of electrodes stacked and accommodated therein, and electrode leads Le electrically connected with the electrode assembly on both sides as shown in FIGS. 4 and 5, respectively.

The electrode assembly includes a positive electrode, a separator, and a negative electrode, wherein the positive electrode, separator, and negative electrode are alternately stacked.

The electrode leads Le include a positive lead L1 electrically connected to a positive electrode of the electrode assembly and a negative lead L2 electrically connected to a negative electrode of the electrode assembly.

Neighboring pairs of cells C may be alternately stacked so that the positions of the positive leads L1 and negative leads L2 are opposite or may be stacked in pairs of several such that the positive leads L1 and negative leads L2 are in the same position.

The cell C comprises an accommodating part Pr and a derivation part Pe, as shown in FIG. 5.

In the accommodating part Pr, an electrode assembly may be located, and in the derivation part Pe, electrode leads Le may be located.

A step is formed between the accommodating part Pr and the derivation part Pe. In this case, the step may vary in height depending on the thickness of the electrode assembly including the accommodating part Pr.

A method of stacking cells C of the present invention is characterized by establishing an imaginary base line BL on each cell C to be stacked and aligning the cells C so that the base lines BL coincide with each other when the cells C are stacked.

The base line BL corresponds to the center of the cell C, and the center of each cell C is found based on the position of both ends of the accommodating part Pr of the corresponding cell C.

In other words, the center of each cell C is found based on the position of both ends of the accommodating part Pr is one half.

The center of the cell C corresponds to the center of the electrode assembly, and the base line BL is formed to pass through the center of the cell C. More specifically, the base line BL is formed across the center of the cell C such that the electrode leads Le of the cell C are located on both sides.

The base line BL is established at a position corresponding to the center of the electrode included in the upper portion of the electrode assembly included in the accommodating part Pr. In other words, the base line BL is formed at a position centered on both ends of the electrode included in the uppermost portion of the electrode assembly.

Both ends of the electrode including the uppermost portion of the electrode assembly correspond to the boundary points of the accommodating part Pr and the derivation part Pe, or correspond to the locations where the steps begin on both sides of the accommodating part Pr.

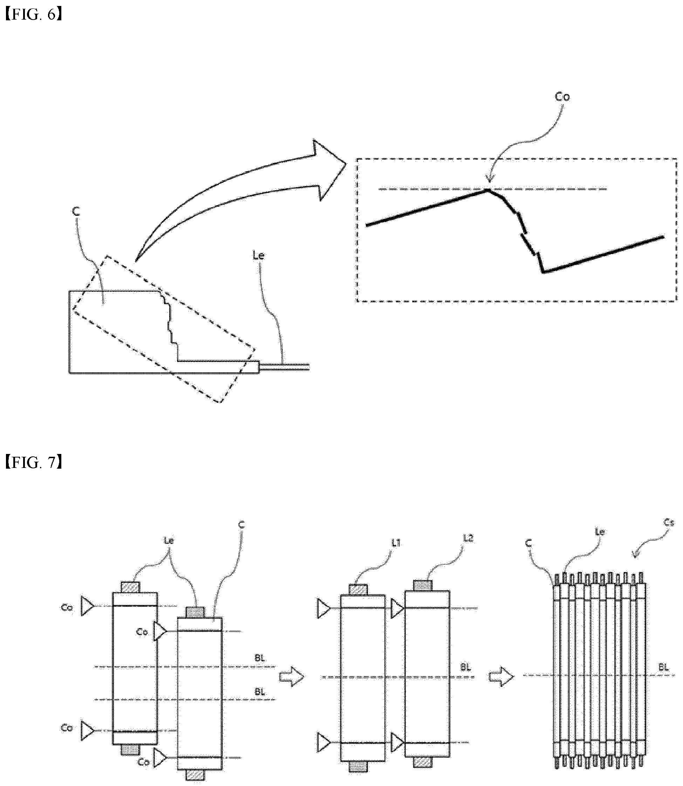

FIG. 6 illustrates the boundary points of the accommodating part Pr and the derivation part Pe of the cell C.

The location where the step starts at the boundary points of the accommodating part Pr and the derivation part Pe, or at both ends of the electrodes including the uppermost portion of the electrode assembly, corresponds to the end of the uppermost electrode as shown in FIG. 6.

The plurality of stacked electrodes may have slightly different end positions, as illustrated in FIG. 6. The present invention identifies both ends of the electrodes located in the uppermost portion of the electrode assembly in order to quickly locate the center of the cell C and establish a base line BL and forms an imaginary base line BL by finding the center of the electrodes based on the positions of both ends of the identified electrodes.

The corner parts of both ends of the accommodating part Pr may be identified by a visual sensor S, as shown in FIGS. 4 and 5.

The visual sensors S are positioned in the upper portions of both sides of the cell C to identify the end positions of the cell C to be targeted and established an imaginary base line BL passing through the center of the cell C based on the identified end positions. In this case, the center of the cell C corresponds to a position that is halfway based on the corner part positions of both ends of the accommodating part Pr.

In this way, each cell C is established a respective base line BL.

### Stacking S2 cells C

A plurality of cells C having a base line BL established is stacked.

FIG. 7 illustrates a process of stacking a plurality of cells C.

As described above, each cell C to be stacked is characterized in that the base lines BL are aligned so that they coincide with each other.

Until each cell C is stacked, there may be a large difference in the position of the cell C, as shown in FIG. 7. Each of the cells C is position-corrected so that the base lines BL established in each of them coincide with each other. At this time, each cell C is adjusted in position by moving in the length direction of the cell C so that the base lines BL are coincided.

When the base lines BL established for the plurality of cells C are all coincided because of the position correction as described above, the cells C are stacked to form a single cell stack Cs.

### (second embodiment)

A method of stacking cells C of the present invention is applicable not only to a cell C in a form in which electrode leads Le are derived at both ends, but also to a cell C in a form in which a pair of electrode leads Le are derived on one side.

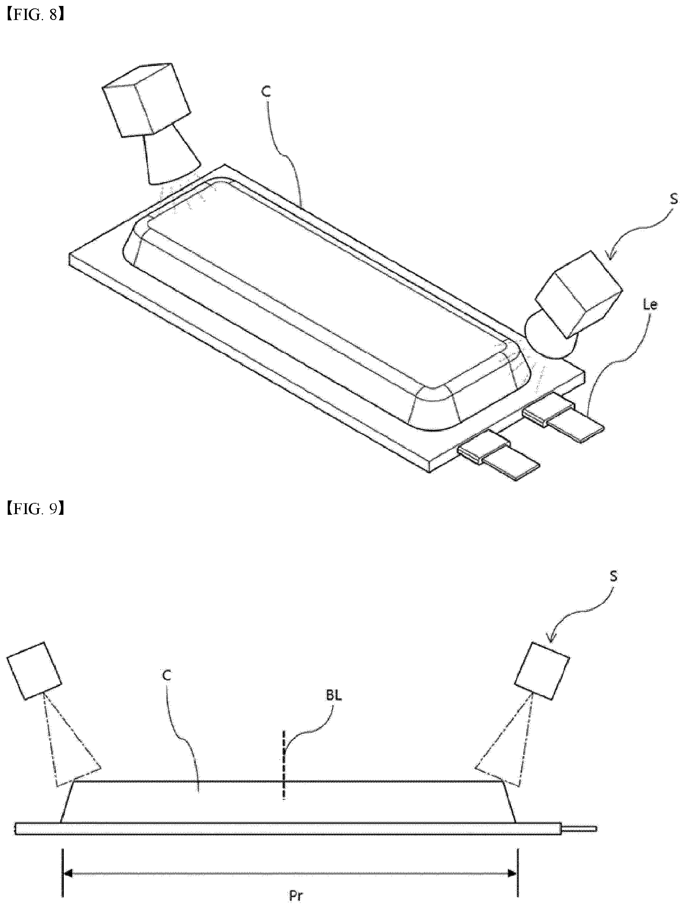

FIG. 8 shows a cell C to be used in the cell C stacking method according to the second embodiment of the present invention, and a visual sensor S to be used for locating the center of the cell C. FIG. 9 shows the cell C and the visual sensor S of FIG. 8 from a side view.

The cell C has an electrode assembly (not shown) having a plurality of electrodes stacked and accommodated therein, and electrode leads Le electrically connected with the electrode assembly on one side, respectively, as shown in FIGS. 8 and 9 above.

The cell C stacking method of the second embodiment is also characterized in that, as in the same manner as the cell C stacking method of the first embodiment above, an imaginary base line BL is established for each cell C to be stacked, and when each of the cells C is stacked, the base lines BL are aligned so that they coincide with each other.

The base line BL corresponds to the center of the cell C, and the center of each cell C is found based on the position of both ends of the accommodating part Pr of the cell C.

In other words, the center of each cell C is found based on the position of both ends of the accommodating part Pr is one half.

The center of the cell C corresponds to the center of the electrode assembly, and the base line BL is formed to pass through the center of the cell C. More specifically, the base line BL is formed across the center of the cell C such that the electrode leads Le of the cell C are located on one side.

The base line BL is established at a position corresponding to a center of the electrode included in the uppermost of the electrode assemblies included in the accommodating part Pr. In other words, the base line BL is formed at a position centered on both ends of the electrode included in the uppermost of the electrode assemblies.

Both ends of the electrodes included in the uppermost part of the electrode assembly correspond to positions where the step starts on both sides of the accommodating part Pr.

The plurality of stacked electrodes may have slightly different end positions. The present invention identifies both ends of an electrode located in the uppermost portion of the electrode assembly in order to quickly locate the center of the cell C and establish a base line BL and forms an imaginary base line BL by finding the center of the electrode based on the positions of both ends of the identified electrode.

The corner parts of both ends of the accommodating part Pr may be identified by a visual sensor S, as shown in FIGS. 8 and 9.

The visual sensors S are positioned in the upper portions of both sides of the cell C to identify the end positions of the cell C to be targeted and establish an imaginary base line BL passing through the center of the cell C based on the identified end positions. In this case, the center of the cell C corresponds to a position based on the corner part positions of both ends of the accommodating part Pr is one half.

In this way, each cell C is established a respective base line BL.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

Cs: cell stack
C: (battery)cell
Co: corner part
Le: electrode lead
L 1: positive lead
L2: negative lead
B: busbar
S: visual sensor
BL: base line
Pr: accommodating part
Pe: protrusion part

## Claims

1. A method of stacking cells, comprising: establishing an imaginary base line at a center of the cells;
stacking a plurality of cells with the base line established; and
the stacked cells are aligned such that the base lines coincide.

2. The method of stacking cells of claim 1, wherein the cell comprises an electrode assembly having a plurality of electrodes stacked therein, and electrode leads are derived on both sides electrically connected with the electrode assembly, respectively.

3. The method of stacking cells of claim 2, wherein a base line is established at a position corresponding to a center of an electrode included in an uppermost portion of the electrode assembly.

4. The method of stacking cells of claim 2, wherein the cell comprises an accommodating part in which the electrode assembly is located; and a derivation part in which the electrode leads are located.

5. The method of stacking cells of claim 4, wherein a step is formed between the accommodating part and the derivation part,
and the center corresponds to a location centered on the location where the step begins on both sides of the accommodating part.

6. The method of stacking cells of claim 4, wherein the center of the cell corresponds to a location centered at a corner of both ends of the accommodating part.

7. The method of stacking cells of claim 4, wherein the center of the cell corresponds to a position based on the corner positions of both ends of the accommodating part is one half.

8. The method of stacking cells of claim 2, wherein the base line is formed across the center of the cell such that electrode leads are positioned on both sides.

9. The method of stacking cells of claim 2, wherein the base line formed to a position centered at the position of both ends of the electrodes included in the uppermost portion of the electrode assembly.

10. The method of stacking cells of claim 2, wherein the electrode assembly comprises a positive electrode, a separator, and a negative electrode,
wherein the electrode leads comprise a positive lead electrically connected to the positive electrode of the electrode assembly and a negative lead electrically connected to the negative electrode of the electrode assembly,
and the neighboring pair of cells are alternately stacked so that the positions of the positive lead and the negative lead are opposite.

11. The method of stacking cells of claim 1, wherein each of the cells is adjusted in position by moving horizontally so that the base lines coincide.
